# EUROPEAN PATENT APPLICATION

(11) **EP 0 756 346 A1**
(43) Date of publication of application: **29.01.1997**
(21) Application number: 96830378.4
(22) Date of filing: 03.07.1996
(51) Int. Cl.: H01M 6/26, H01M 6/32

(54) **Instantaneously rechargeable voltaic cell**

(30) Priority: 26.07.1995 IT RM950512
(71) Applicant: Presti, Francesco, 00055 Ladispoli (Roma) (IT)
(72) Inventor: Presti, Francesco, 00055 Ladispoli (Roma) (IT)
(74) Representative: Iannone, Carlo Luigi

(57) **Abstract**

The invention relates to an instantaneously rechargeable voltaic cell comprising at least a single component (14), electrically serially connected and in fluid communication with other eventual components (14), each one comprising a container (1) having at least one end opened, an anode element (4), provided with openings (5) for the circulation of fluid, a cathode element (9), provided within said anode element (4), said opened ends of said plurality of single components 814) being in fluid communication in serially by manifolds (12), and within the assembly made up of said single components (14) and said manifold (12) a catalyst liquid being introduced, said assembly being sealed.

## Description

The present invention relates to an instantaneously rechargeable voltaic cell.

More particularly, the invention relates to a voltaic cell realised in such a way that it is easily instantaneously rechargeable simply and rapidly replacing the liquid contained therein without the need of providing a charge by connection with an electric network or like.

Still more particularly, the solution according to the invention is suitable to be used either for voltaic cells to be employed e.g. for electric powered vehicles, or as voltaic cells for articles supplied by one or more voltaic cells.

As it is well known, in the recent years it is always more increased the need of having at disposal a solution allowing to have transport electric vehicles, particularly in towns always more polluted.

Up to day, the electric powered vehicles have had a reduced development due to the fact that they have a very reduced autonomy, and in any case in order to reach a longer autonomy they would require a number of voltaic cells very high, with the consequent high weight.

Furthermore, the voltaic cells presently known need a charging of at least eight hours, so that the vehicle can be used only partially, unless the voltaic cell is completely replaced, the latter being a very complex operation.

As to the "portable" voltaic cells, as it is well known they are disposable, and in view of the fact that they are very expensive, it is well evident that they are not so convenient.

In this picture can be introduced the solution according to the present invention which solves all the above mentioned drawbacks by providing an voltaic cell instantaneously rechargeable in a very simple and cheap way.

The voltaic cell according to the invention can be used for electric powered vehicles, said cell being able to give to the same a long autonomy and being rechargeable in an extremely simple and fast way.

Further, the solution according to the invention allows to realised rechargeable portable voltaic cells.

It is therefore specific object of the present invention an instantaneously rechargeable voltaic cell comprising at least a single component, electrically serially connected and in fluid communication with other eventual components, each one comprising a container having at least one end opened, an anode element, provided with openings for the circulation of fluid, a cathode element, provided within said anode element, said opened ends of said plurality of single components being in fluid communication in serially by manifolds, and within the assembly made up of said single components and said manifold a catalyst liquid being introduced, said assembly being sealed.

Preferably, according to the invention, said catalyst fluid is made up of a 1 - 20 % solution, preferably a 5% solution, of acid and water, with the add of a salt in a proportion ranging between 3 - 30 g/l, preferably 5 g/l.

Furthermore, according to the invention, said solution comprises a sulphate in a proportion ranging between 1 - 3 g/l, preferably 2 g/l.

Still according to the invention, said solution comprises sulphuric acid, potassium chloride and potassium bisulphite.

Always according to the invention, said container of the single component provide above a screwed plug, a pair of upper lateral holes for the passage of the electric wires for the connection with the following element, and the vent for gases produced during the chemical reaction, and it is made up of plastic material.

Moreover, according to the invention, a single closure element for all the containers of the single components can be provided.

Further, said anode element is made up of a copper, gold or silver hollow element comprising inside means for the coupling of said cathode element, and provided with electric connection means for the connection with the following component, and it can provide elements for the proper positioning and the insulation of the cathode element.

Always according to the invention, said cathode element is made up of a zinc, cadmium , etc., element provided within said anode element, preferably having a substantially cylindrical shape and screwed in said anode element.

Further according to the invention, said cathode element can provide inside a metal core made up of a material more resistant to the acid attack, for example brass, iron or nickel.

Still according to the invention, it can be provided a valve for the connection between the lower part and the upper part of the voltaic cell for the blow-by of the liquid within the same cell.

A gas can outflow from the voltaic cell according to the invention, said gas can be eventually employed for different uses.

The present invention will be now described, for illustrative but not limitative purposes, according to its preferred embodiments, with particular reference to the figures of the enclosed drawings, wherein:

figures 1a and 1b show, respectively in side view and in section, a first element of a component of the voltaic cell according to the invention;
figures 2a and 2b show, respectively in side view and in section, a second element of a component of the voltaic cell according to the invention;
figures 3a and 3b show, respectively in side view and in section, a third element of a component of the voltaic cell according to the invention;
figures 4a and 4b show, respectively in side view and in section, a manifold of the voltaic cell according to the invention;
figure 5 is a top view of a component of the voltaic cell according to the invention;
figure 6 is a partially broken away side view of a voltaic cell according to the invention;
figure 7 is a top view of the voltaic cell according to the invention;
figure 8 is a side view of the voltaic cell according to the invention;
figure 9 is a bottom view of the voltaic cell according to the invention;
figure 10 is a partially broken away side view of a voltaic cell according to the invention;
figure 11 diagramatically shows a plan of the liquid within the voltaic cell according to the invention;
figure 12 shows a perspective view of a second embodiment of the voltaic cell according to the invention;
figure 13 is an exploded view of the cell of figure 12;
figure 14 is a top view of the voltaic cell of figure 12;
figure 15 shows a partially broken away side view of the cell of figure 12; and
figure 16 is a section view of a different embodiment of the cathode element that can be used with both the embodiments of the cells shown.

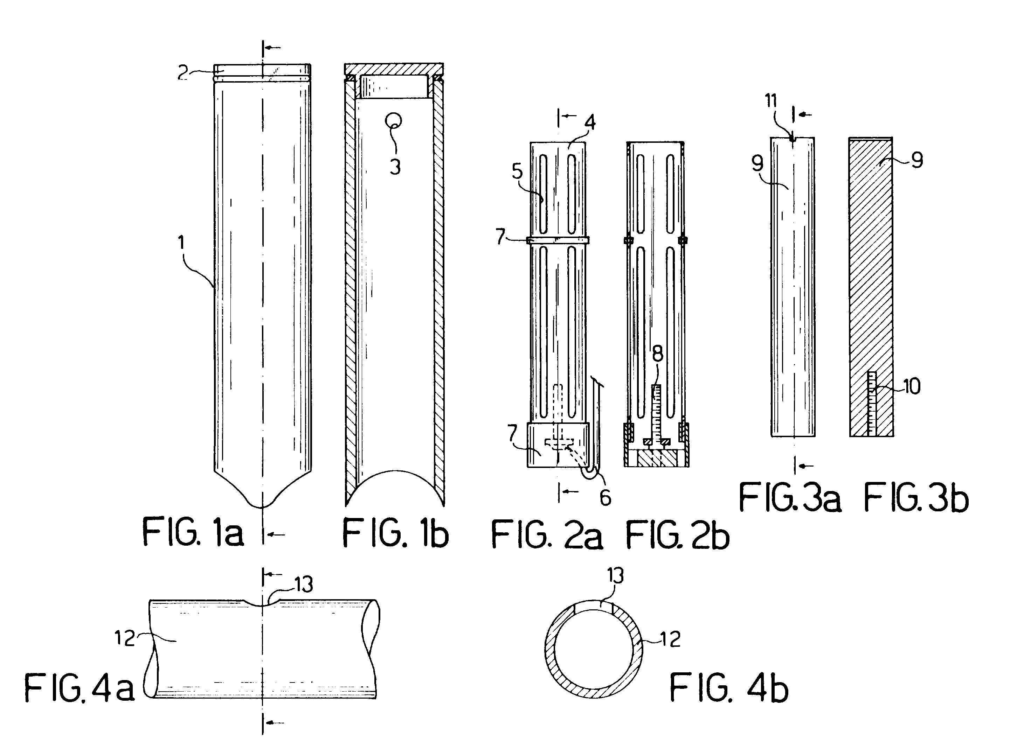

Referring first to figures 1 - 5, it is possible to observe the structure of a single component of the voltaic cell according to the invention and of the connection manifold among the different components.

Particularly, in figures 1a and 1b, it is shown a plastic material housing 1, provided at the top of a screwed plug 2 and with two holes 3 (in figure 1b only one hole can be seen).

At the bottom, said housing 1 is opened and shaped in such a way to couple with the manifold that will be described later.

Coming now to observe figures 2a and 2b, the copper anode element 4 is shown, said element being centrally hollow, provided with slots 5 for the circulation of the liquid, and provided at the bottom with an electric wire for the connection with the following element.

By the numeral 7 the thickening made up with plastic reinforced by fibre glass are shown, said thickening being used for the proper positioning with respect to the other elements and for the insulation of the various elements.

Said electric wire 6 is coupled with a screw 8 provided within the element 4, for the coupling of the cathode element that will be described later.

In figures 3a and 3b it is shown the zinc cathode element 9 which is introduced within the anode element 4 provided with a thread 10, for the coupling with the screw 8 and a split head 11 for its screwing. Coming now to observe figures 4a and 4b, the manifold 12 for the connection of the various components is shown, said manifold being internally hollow and provided with holes 13 in correspondence of the single elements.

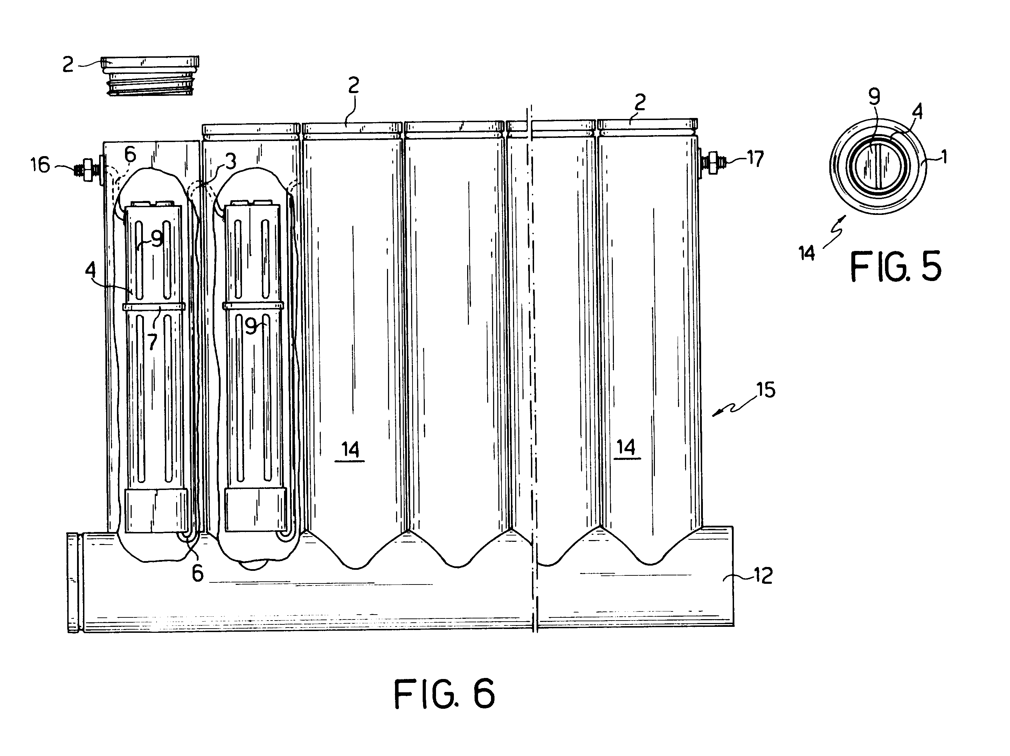

In figure 5 it is shown from the top a single component 14 of the voltaic cell according to the invention with the elements 1, 4 and 9 properly positioned.

Figure 6 instead shows a voltaic cell according to the invention, being in any case to be taken into consideration that the shape and the dimensions of the voltaic cell, as well as the number of the single elements, can be modified according to the specific needing without departing from the general scope of the invention.

As it can be seen, the voltaic cell 15 of figure 6 is comprised of a plurality of single elements 14, serially connected by the electric wires 6 passing through the holes 3 of the housings 1, starting from the electrode 16 up to the electrode 17, the manifold 12 being placed below said components 14.

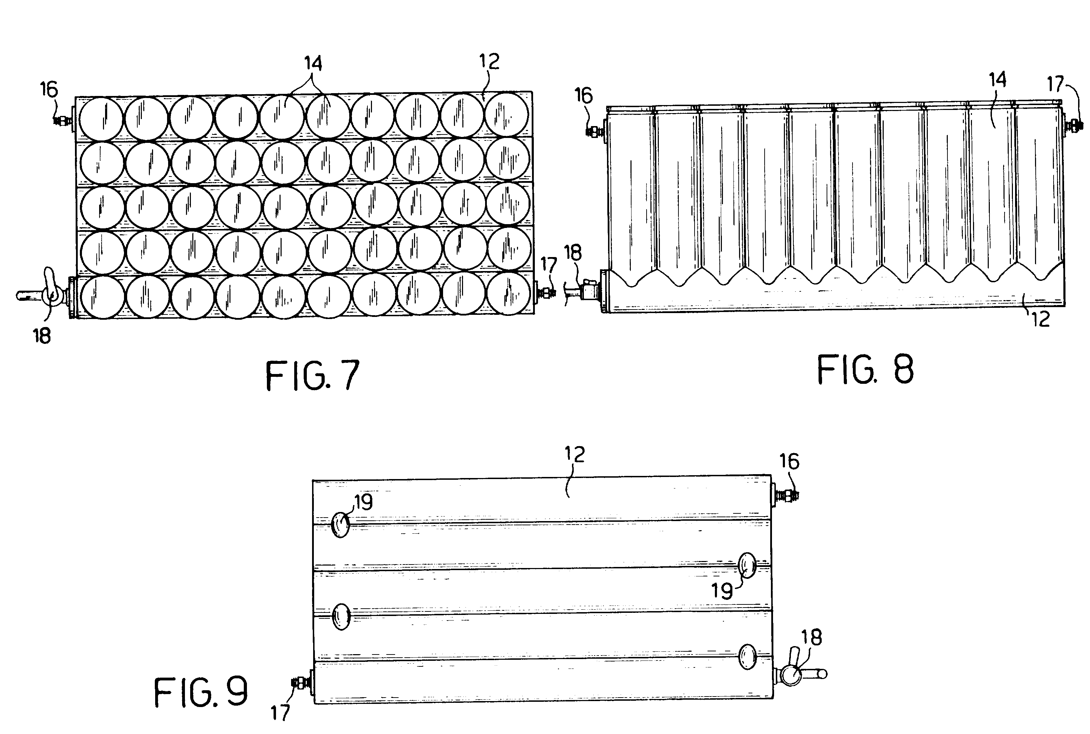

From figures 7 and 8 it can be noted the structure of the voltaic cell 15, the components 14 being placed along different rows, and provided with an emptying faucet.

Even if they are placed along different rows, the single components are always serially connected by the lower passages 19 shown in figure 9.

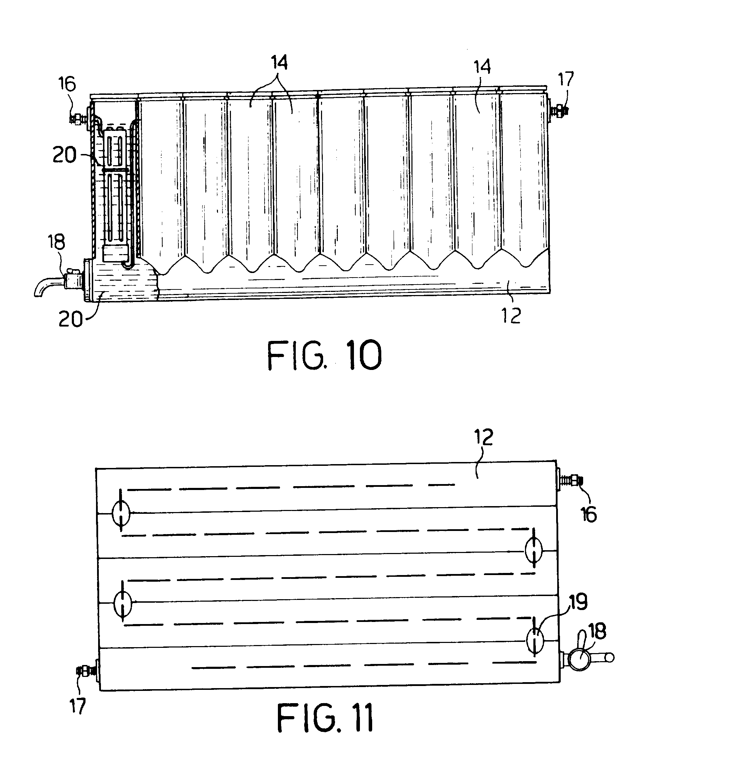

In figure 10 it can be seen the liquid 20 which is introduced opening the plug 2 and fills the various components 14 and the manifold 12. As already said, the voltaic cell 15 could be even connected with a tank (not shown) of the liquid, provided with means for the circulation of the same liquid.

Finally, in figure 11 the path of the liquid 20 through the various elements of the voltaic cell according to the invention is shown.

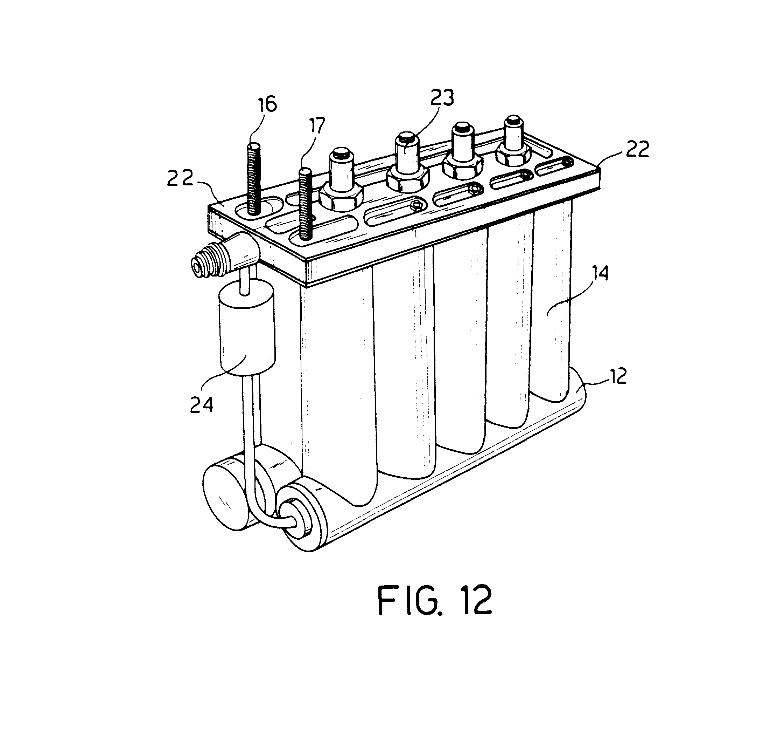

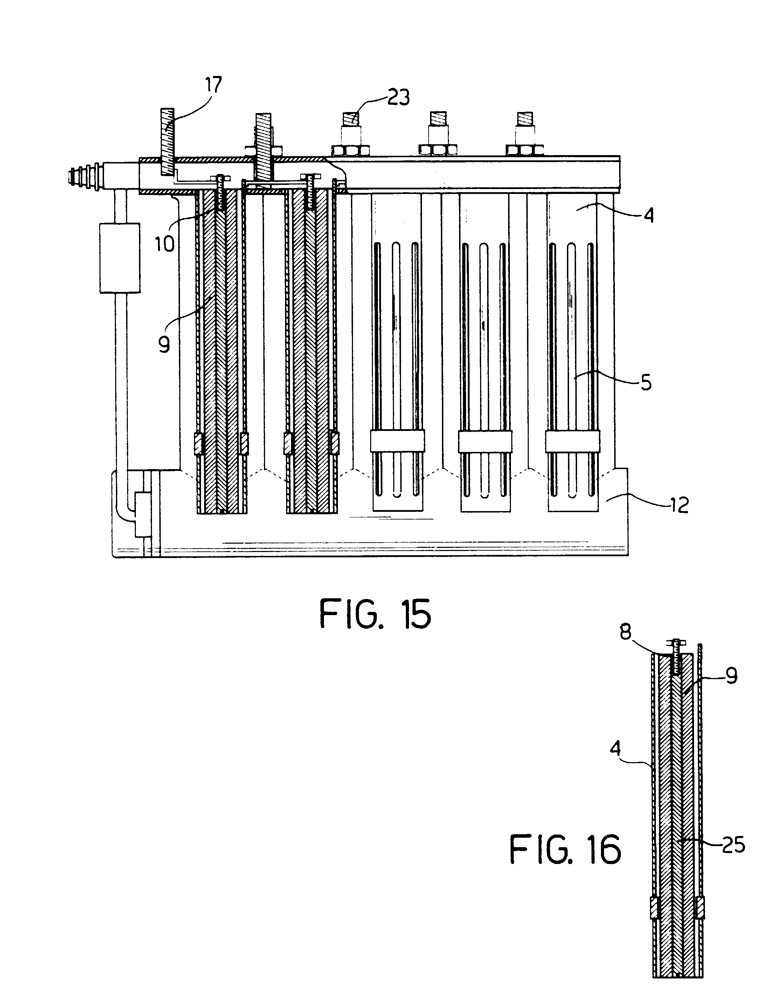

Coming now to observe figures 12 -15, a second embodiment of the voltaic cell according to the invention is shown.

In these figures, the parts corresponding to those of figures 1 - 11 are indicated by the same numeral references.

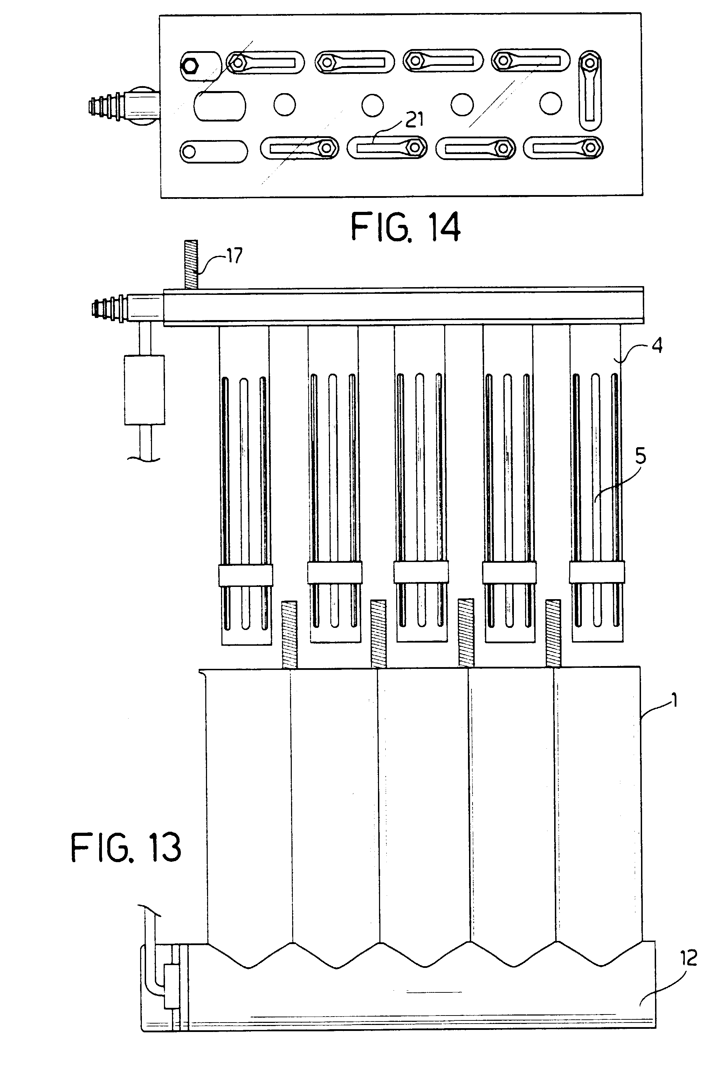

In this embodiment, the electric serially connection of the following elements is obtained by upper reeds 21 that are well shown in figures 14.

In this way it is avoided to provide connection electric wires 6, being thus possible to reduce the dimensions of the cell and to obtain advantages for the efficiency of the same cell.

Above said reeds 21 a plastic sheet 22 for its sealing is provided.

The electrodes 16 and 17 projects from said sheet 22.

The assembly is blocked by bolts 23.

Furthermore, a valve 4 is provided connecting the lower part with the upper part of the element assembly 14 in order to recirculate the liquid contained within the voltaic cell.

Observing now 16, it can be noted a different arrangement of the cathode element providing a core 25 made up of a metal more resistant to the acid, for example brass, iron, nickel, with a negative sign, in order to obtain a more uniform wear of the cathode element.

Within the voltaic cell according to the invention the liquid already described is placed, said liquid preferably comprising 10% of sulphuric acid, 20 g/l of potassium chloride, 2 g/l of potassium bisulphite and the remaining water.

When the liquid is depleted, it is sufficient to replace it in order to have the voltaic cell immediately operative.

The liquid recovered can be regenerated after having been filtered.

On the basis of tests carried out, and the relevant data are provided for illustrative purposes, it has been observed that a single component 14, using the above liquid, gives a voltage of 0,6 V and a tension of 0,50 A.

The voltaic cell obtained is really simple and cheap, so that it can be used to solve the above mentioned drawbacks.

In case the liquid used has a higher percentage of acid, a higher power is obtained, while reducing the acid percentage the power is reduced and the voltage is increase.

Also the bisulphite is useful to increase the voltage of the voltaic cell.

Furthermore, the technical teachings according to the invention allow to obtain the maximum flexibility for the realisation of the cell and thus does not imposes design constraints.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Instantaneously rechargeable voltaic cell characterized in that it comprises at least a single component, electrically serially connected and in fluid communication with other eventual components, each one comprising a container having at least one end opened, an anode element, provided with openings for the circulation of fluid, a cathode element, provided within said anode element, said opened ends of said plurality of single components being in fluid communication in serially by manifolds, and within the assembly made up of said single components and said manifold a catalyst liquid being introduced, said assembly being sealed.

2. Instantaneously rechargeable voltaic cell according to claim 1, characterized in that said catalyst fluid is made up of a 1 - 20 % solution of acid and water, with the add of a salt in a proportion ranging between 3 - 30 g/l.

3. Instantaneously rechargeable voltaic cell according to claim 2, characterized in that said catalyst fluid is made up of a 5% solution, of acid and water, with the add of a salt in proportion of 5 g/l.

4. Instantaneously rechargeable voltaic cell according to claim 2 or 3, characterized in that said solution comprises a sulphate in a proportion ranging between 1 - 3 g/l.

5. Instantaneously rechargeable voltaic cell according to claim 4, characterized in that said solution comprises a sulphate in a proportion of 2 g/l.

6. Instantaneously rechargeable voltaic cell according to one of the preceding claims, characterized in that said solution comprises sulphuric acid, potassium chloride and potassium bisulphite.

7. Instantaneously rechargeable voltaic cell according to one of the preceding claims, characterized in that said container of the single component provide above a screwed plug

8. Instantaneously rechargeable voltaic cell according to one of the preceding claims 1 - 6, characterized in that it provides a single closure element for all the containers of the single components.

9. Instantaneously rechargeable voltaic cell according to one of the preceding claims, characterized in that said container of the single component provides a pair of upper lateral holes for the passage of the electric wires for the connection with the following element, and the vent for gases produced during the chemical reaction.

10. Instantaneously rechargeable voltaic cell according to one of the preceding claims, characterized in that said container of the single component is made up of plastic material.

11. Instantaneously rechargeable voltaic cell according to one of the preceding claims, characterized in that said anode element is made up of a copper, gold or silver hollow element comprising inside means for the coupling of said cathode element, and provided with electric connection means for the connection with the following component.

12. Instantaneously rechargeable voltaic cell according to claim 11, characterized in that said anode element provides elements for the proper positioning and the insulation of the cathode element.

13. Instantaneously rechargeable voltaic cell according to one of the preceding claims, characterized in that said cathode element is made up of a zinc, cadmium , etc., element provided within said anode element, preferably having a substantially cylindrical shape and screwed in said anode element.

14. Instantaneously rechargeable voltaic cell according to one of the preceding claims, characterized in that said cathode element provides inside a metal core made up of a material more resistant to the acid attack, e.g. brass, iron or nickel.

15. Instantaneously rechargeable voltaic cell according to one of the preceding claims, characterized in that it is provided a valve for the connection between the lower part and the upper part of the voltaic cell for the blow-by of the liquid within the same cell.
